# EUROPEAN PATENT SPECIFICATION

(11) **EP 4 031 295 B1**
(45) Date of publication and mention of the grant of the patent: **16.09.2026**
(21) Application number: 19798125.1
(22) Date of filing: 20.09.2019
(51) Int. Cl.: B07B 1/20, B02C 13/00, B02C 13/02, B02C 13/06, B02C 13/28, B02C 23/08, B07B 13/04, B09B 3/00

(54) **WASTE TREATMENT DEVICE AND RELATED MOUNTING METHOD**
VORRICHTUNG ZUR ABFALLBEHANDLUNG UND SEIN MONTAGEVERFAHREN.
APPAREIL POUR LE TRAITEMENT DES DÉCHETS ET MÉTHODE D'ASSEMBLAGE DE CET APPAREIL.

(43) Date of publication of application: 27.07.2022
(73) Proprietor: WASTE ENGINEERING SAGL, 6900 Paradiso (CH)
(72) Inventor: FORMAGGIO, Daniele, 35042 Este, Padova (IT)
(74) Representative: De Giorgi, Michele
(86) International application number: PCT/IB2019/057985
(87) International publication number: WO 2021/053378

(56) References cited:
- EP-A1- 1 787 713
- CN-U- 205 659 737
- KR-A- 20150 143 098
- US-A1- 2011 186 664

## Description

### TECHNICAL SECTOR

The present disclosure relates to waste treatment devices and more particularly to a waste treatment device designed to separate recyclable material, for example plastic, which is mixed up with other materials in the treated waste, as well as to a related mounting method.

### BACKGROUND

Plastic waste, for example of domestic origin, is often mixed with other solid materials and/or organic waste material, which is difficult to eliminate. This happens in particular in the case of the plastic sheets which are used to wrap food products, as well as other products.

In order to be able to recycle such plastic, the waste is treated in special machines, called separators, which break up the bags and/or containers and their contents, shredding them, wash the shreds in order to remove the organic residue and the dirt in general and, finally, separate the plastic from the waste water. At the end of treatment, the separators produce recyclable pieces of shredded plastic and waste water to be disposed of in the sewerage system, where necessary after purification.

Known separation devices are, for example, disclosed in prior art documents KR20150143098A, CN205659737U, US2011/186664A1, EP1787713A1.

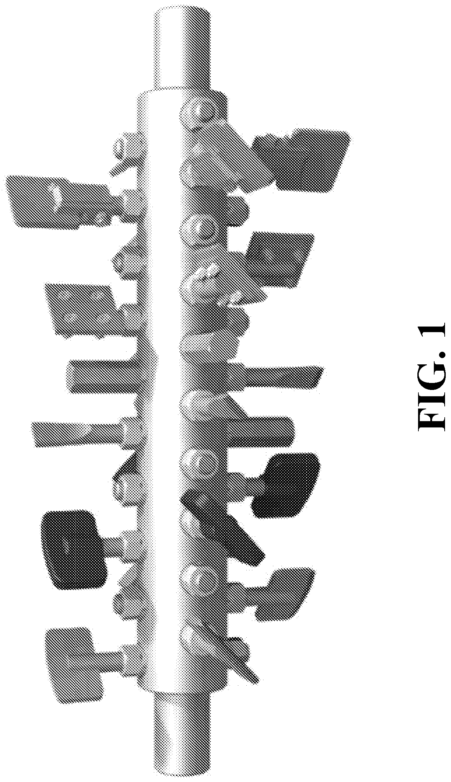

A separator typically has, defined inside it, a first substantially cylindrical cavity, which is typically filled with washing water and inside which the waste to be treated is introduced via an inlet opening. A shaft rotating about its axis is installed in the centre of the cylindrical cavity of the separator and has, mounted thereon, blades which project radially therefrom and which are also rotatable about an axis thereof, directed radially, as shown in Figure 1. When the shaft is made to rotate, typically at a frequency in the region of a few hundreds of rpm, the rotating blades strike the waste to be treated, shredding it and pushing the waste so that it advances in the axial direction inside the cavity towards an outlet opening. The same thing happens when there is an endless screw rotor instead of the shaft.

Screening meshes separate the first cylindrical cavity from a second underlying cavity intended to collect the waste material. As the waste advances inside the cavity in the longitudinal direction, it is shredded by the blades mounted on the rotating shaft (or the endless screw) and the waste material passes by means of gravity through the screening meshes, ending up inside the second cavity. At the end of treatment shredded pieces of plastic are output from the outlet opening and are collected inside a discharge container, while the waste material is collected in the underlying cavity and pumped away together with the washing liquid.

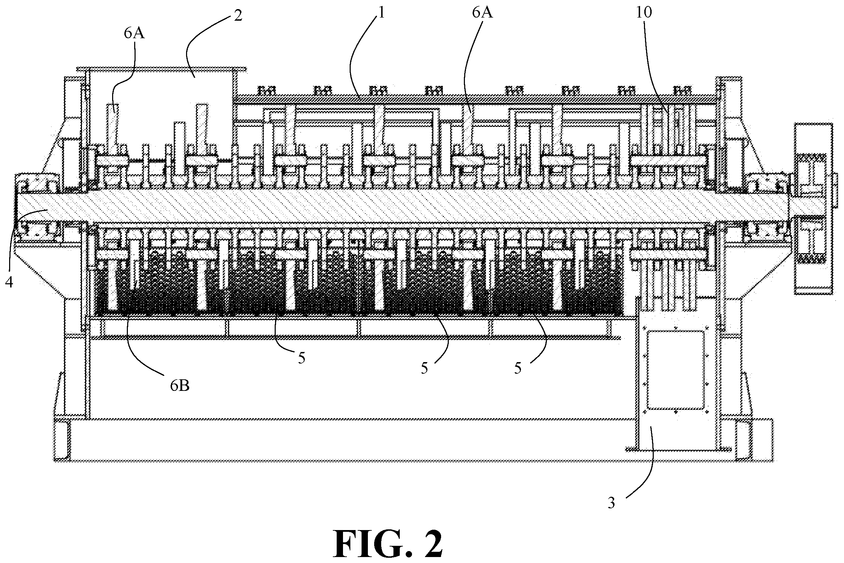

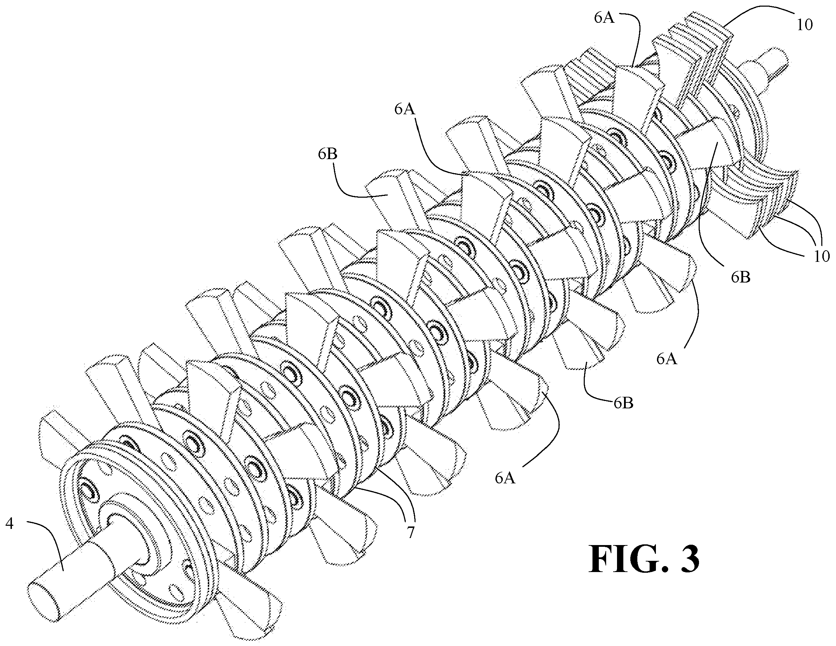

Italian patent application No. 102016000105648 filed on 20 October 2016 discloses a waste treatment device, shown in Figures 2 and 3, which is suitable for separating recyclable material mixed together with other waste, in particular organic waste.

It has a casing 1 with an inlet opening 2 for the waste to be treated and an outlet opening 3 for the material to be recycled. The casing has, defined inside it, a first substantially cylindrical cavity into which the waste is inserted and which contains a shaft 4 rotating about an axis thereof substantially in the centre of the first cavity, and an underlying second cavity separated from the first cavity by means of screening meshes 5. The first cavity is intended to treat the waste and is configured to retain inside it the material to be recycled, while the second underlying cavity is intended to collect the waste material. Differently from the shaft shown in Figure 1, the shaft of the separator according to the present disclosure has, mounted thereon, hammers 6A and 6B of two different types for breaking open the bags of waste and forcing the waste to advance longitudinally inside the first cavity towards the outlet opening 3. Conveniently said separator comprises hammers of at least two types: first hammers with thin chamfered profiles for cutting up the waste and pushing it in the axial direction; and second hammers with chamfered profiles, thicker than those of the first hammers, for grinding the waste and pushing it in the axial direction, said hammers being mounted in an arrangement alternating with each other along the shaft.

Even though the separating device of the cited patent application offers the significant advantage of not being affected by the problem of the frequent damage caused to the screening meshes by fragments of the rotating blades which break off due to wear and which are pushed with force by other blades against the screening meshes, causing them to break, its performance is not optimal since there still remains an undesirable amount of waste material mixed up with the recyclable material which is output from the separator device.

### SUMMARY

Tests carried out by the Applicant lead to the conclusion that the presence of waste material mixed together with the recyclable material output by the separator device according to the abovementioned patent application is attributable to the presence of pieces of plastic which are deposited on the screening mesh, blocking up at least partially the mesh openings, thus preventing the waste material which has been reduced to a sludge from falling into the cavity intended to receive it. This could be due to the fact that the hammers are designed to pass at a certain distance from the screening mesh, in order to avoid making contact with it, and that, owing to the inevitable mounting play, they do not pass very close to the screening mesh at a nominal distance of 3-4 mm, but at a distance which is a few millimetres more. Consequently, there is a relatively big space which is not swept the hammers and fragments of recyclable material accumulate in this space and block up the openings of the screening mesh, with the result that not all the waste material, which has been reduced to a sludge, is able to pass through the mesh openings.

In order to solve this problem, in theory it is possible to produce hammers with varying lengths in order to compensate for the mounting play of the separator devices, although this would be very costly.

According to an embodiment of the device described in the present disclosure, a scraper is removably mounted on at least one hammer of the separator so as to increase the longitudinal dimension thereof, the scraper terminating in an edge which projects beyond the free end of the hammer and being directed in a direction substantially parallel to the axis of the shaft.

According to the mounting method of the present disclosure, after installing the hammer (or hammers) on the rotating shaft, the actual minimum distance at which the end of the hammer passes over the screening mesh is measured and the scraper is chosen so that its height, i.e. the part which extends the longitudinal dimension of the hammer, corresponds to the difference between the actual minimum distance and a nominal minimum distance from the screening mesh.

The claims as deposited form an integral part of the present disclosure and are incorporated herein for specific reference thereto.

### BRIEF DESCRIPTON OF THE DRAWINGS

Figure 1 shows a shaft with blades of a known separator.
Figure 2 shows a cross-sectional view of a separator disclosed in Italian patent application No. 102016000105648.
Figure 3 shows a shaft of a separator device according to Figure 2 with hammers of two different types having a wedge-like chamfer and club heads for discharging shredded pieces of plastic.
Figure 4 shows a perspective view of a hammer with a relatively thin wedge-like chamfer which has, removably fixed thereto, a scraper with edge intended to be directed parallel to the axis of rotation of the shaft of the treatment device according to the present disclosure.
Figure 5 shows a shaft of a treatment device according to the present disclosure with two different types of hammers having wedge-like chamfers to which respective scrapers are fixed.
Figure 6 is a partially cross-sectioned perspective view of the shaft according to Figure 5.

### DETAILED DESCRIPTION

A waste treatment device according to an embodiment of the present disclosure suitable for separating recyclable material mixed together with other waste (abbreviated "separator") is substantially of the type described in the aforementioned Italian patent application, since:
- it has, defined inside it, a first substantially cylindrical cavity inside which the waste to be treated is introduced;
- it has a shaft, rotating about its axis, in the centre of the cylindrical cavity;
- it has at least one screening mesh which separates the cylindrical cavity, inside which recyclable waste is confined, from a second underlying cavity inside which waste material is collected.

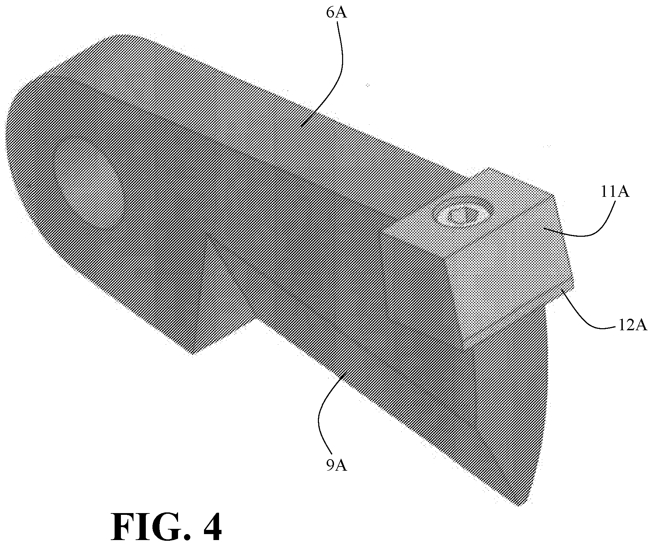

Differently from the treatment device cited in the aforementioned Italian patent application, in the device according to the present disclosure the rotating shaft has at least one hammer to which a scraper is fixed. Figure 4 shows a hammer 6A with a relatively thin wedge-like chamfer 9A on top of which a scraper 11A provided with an edge 12A is removably fixed, in accordance with the present disclosure. The scraper 11A is mounted on the free end of the hammer 6A so that the edge 12A projects longitudinally beyond the free end of the hammer, increasing the longitudinal dimension thereof. The edge 12A is directed so as to be substantially parallel to the axis of rotation of the rotating shaft 4 when the hammer 6A is pivotably mounted on the rotating shaft 4.

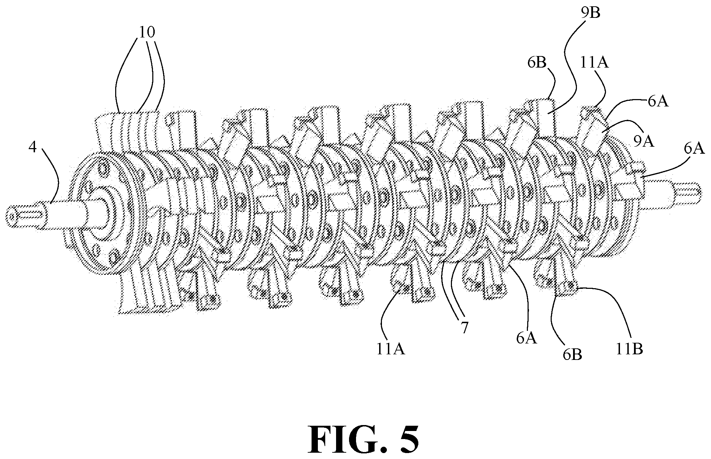

Figure 5 shows a rotating shaft 4 of a treatment device according to the present disclosure, in which the same reference numbers as in Figure 4 indicate the same parts, said figure illustrating the particular case where all the hammers 6A and 6B which have chamfer which is respectively thin 9A and thick 9B are provided with respective scrapers 11A and 11B. As in the case of the known device of Figure 3, the treatment device according to Figure 5 also has hammers 6A with a thin chamfer 9A and hammers 6B with a thicker chamfer 9B which are arranged alternately along the axis of the shaft 4, so that the waste to be treated is subjected to cutting and grinding actions alternately as the waste advances inside the first cylindrical cavity towards the outlet opening 3.

Alternatively, it is also possible to have hammers 6A or 6B of the same type and/or hammers 6A and 6B of a different type, arranged along the rotating axis 4 alternately in a different way from that shown or with a different distribution along the axis of the shaft or in the various holes of the discs 7.

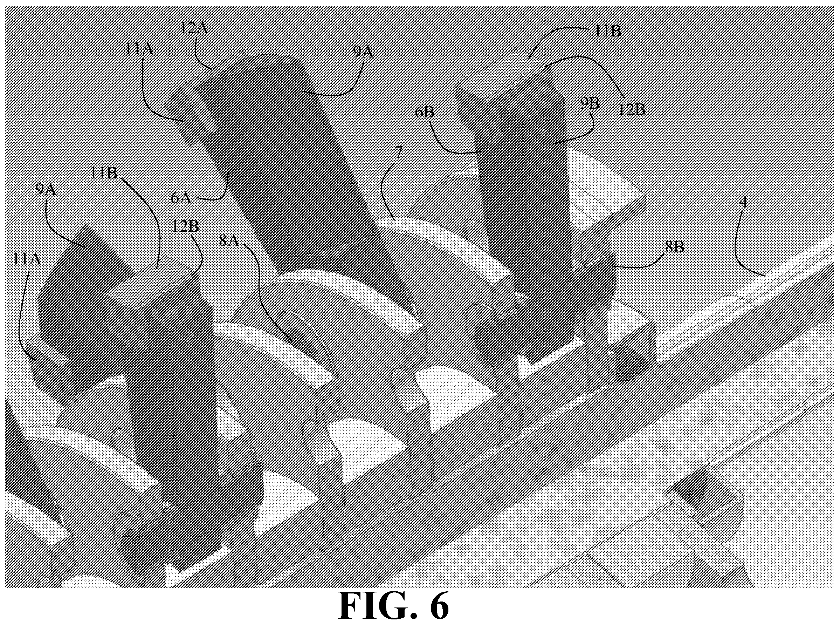

Figure 6 is a partially cross-sectioned perspective view of the shaft 4 according to Figure 5 which shows the hammers 6A with thin chamfer 9A, for breaking open bags and packages of expired products, and the grinding hammers 6B, on top of each of which a corresponding scraper 11A and 11 is respectively mounted.

As shown in the figure, the hammers 6A and 6B are of two different types which are arranged alternately along the shaft 4, have one end constrained so as to be able to rotate in a plane perpendicular to the axis of rotation of the shaft 4 and the other end shaped with a wedge-like chamfer for breaking up the waste, so as to shred it, and for pushing the shreds in the axial direction. The hammers of the first type 6A have a thin front profile for cutting up the waste, while the hammers of the second type 6B have a thick front profile 9B for grinding the waste.

Figures 4 and 5 show how the hammers 6A and 6B may be made and how they may be mounted. In the embodiment shown in Figure 4, the hammer 6A has a first end 8A retained between the opposite holes of two adjacent discs 7, and a second end 9A shaped with a relatively thin wedge-like chamfer which allows the waste to be cut and also pushed in the axial direction. In the embodiment shown in Figure 5, the hammer 6B has the first end 8B mounted between the two opposite holes of two adjacent discs 7, and the second end 9B shaped with a thicker wedge-like chamfer. This latter type of chamfer allows the waste to be ground, while the chamfered part helps push the waste so that it advances in the axial direction towards the outlet opening 3.

When the shaft 4 is rotated by a motor (not shown in Figure 2), the hammers hit the waste, breaking it up and pushing it in the axial direction, by means of the wedge-like chamfer 9A and 9B.

The longitudinal dimension (length) of the hammers 6A and 6B is determined so that the free end of the hammers passes close to the screening meshes 5 so as to act on all the waste contained inside the first cavity. Typically, the hammers 6A and 6B have a length such as to pass at a distance of not less than 1 cm from the screening meshes 5 so as to be sure that, despite the inevitable play arising during assembly of the machine, the hammers 6A and 6B will in any case not hit against the screening meshes 5 and will remain at a nominal minimum safety distance from the said screening meshes 5. This nominal minimum distance is established as being the best compromise between the need to prevent the hammers 6A and 6B touching the screening meshes 5 and the need to ensure that the first cavity is swept as far as possible by the hammers 6A and 6B so as not to leave spaces inside which the waste may easily accumulate.

Owing to the play due to assembly of the device, the hammers 6A and 6B pass at an actual distance from the screening meshes 5 which may not be precisely determined before assembly of the shredding device, and the Applicant has noted that often this actual distance is much greater than the nominal minimum distance. Without being limited to any one theory, the Applicant considers that the excessive presence of waste material mixed together with the recyclable material, which is output from the shredding device, is due to an excessive accumulation of waste in that part of the first cavity which is not swept by the hammers 6A and 6B, namely the area next to the screening meshes 5 defined by the actual distance at the which the hammers 6A and 6B pass over the screening meshes 5.

In theory it would be possible to consider providing a set of hammers 6A and 6B which have different longitudinal dimensions (lengths) and, after mounting the rotating shaft 4 and the screening meshes 5, choose the hammers of most suitable length so as to ensure that this actual distance corresponds to the nominal minimum distance. However, this not very practical and would be decidedly costly.

In order to overcome this difficulty, according to the present disclosure, a scraper 11A or 11B is mounted on the respective hammer 6A or 6B. Scrapers 11A and 11B of different heights are manufactured, namely by varying the distance between the respective edge 12A or 12B on the side which rests against the free end of the hammer 6A or 6B so as to increase the longitudinal dimension thereof. According to the present disclosure, the shredding device is assembled and the hammers 6A and 6B are attached to the rotating shaft 4, then the actual distance at which the hammers 6A and 6B pass by the screening meshes 5 is measured, and then finally respective scrapers 11A and 11B with a height corresponding to the difference between the nominal minimum distance and the actual distance are chosen and they are mounted on the respective hammers 6A and 6B. In this way, the hammers 6A and 6b are "extended" longitudinally and the part of the first cavity which is not swept by the hammers is reduced to a minimum.

Providing scrapers 11A and 11B with different heights is simple and low-cost. Moreover, it is easy to transport to the assembly location a set of scrapers from which those with the most suitable height may be chosen. Consequently, the assembly tolerances of the waste treatment device are much less severe than those for the known treatment devices since any play may be easily compensated for by choosing scrapers 11A and 11B with a suitable height.

Conveniently, these scrapers 11A and 11B will be removably mounted on the hammers 6A and 6B, for example by means of an Allen key as shown in Figure 4, so that they may be easily fixed during a final stage of assembly of the entire treatment device once the hammers are already installed and be singly replaced, should the need arise, practically without disassembling the treatment device.

As shown in Figure 6, the edges 12A and 12B of the scrapers 11A and 11B are directed in a direction substantially parallel to the axis of the rotating shaft 4 so as to follow the cylindrical profile of the inner part of the screening meshes 5 which define the first cavity of the shredding device, removing any residual material blocking the openings of the screening meshes 5.

Using an experimental prototype of a treatment device according to this disclosure, it was established that the pieces of shredded plastic obtained are practically free from waste material and may be directly processed in the recycling centres.

## Claims

1. Waste treatment device suitable for separating recyclable material mixed together with other waste, comprising:
a casing (1) which has, defined internally, a first substantially cylindrical cavity inside which waste to be treated is introduced through an inlet opening (2), a second underlying cavity for collecting waste material and an outlet opening (3) for discharging from the first cylindrical cavity material to be recycled, defined in a zone longitudinally opposite to the inlet opening (2),
a shaft (4), rotating about an axis of rotation thereof, substantially in the centre of the first cylindrical cavity,
at least one screening mesh (5) which separates the first cylindrical cavity, intended to contain recyclable material, from the second underlying cavity intended to collect waste material,
at least one hammer (6A; 6B) having a first end constrained to said shaft (4), so as to be able to rotate in a plane perpendicular to the axis of rotation of the shaft (4), and terminating in a second end, opposite to the first end, configured to break up the waste, shredding it, and to push the shredded waste so that it advances in an axial direction inside the first cylindrical cavity towards the outlet opening (3), and having either a thin front profile (9A) for cutting up the waste and pushing it in the axial direction, or a thick front profile (9B) for grinding the waste and pushing it in the axial direction,
**characterized in that**:
said at least one hammer (6A; 6B) is provided with a respective scraper (11A; 11B) terminating in an edge (12A; 12B), said scraper (11A; 11B) being removably fixed on said second end of the hammer (6A; 6B) so as to extend the longitudinal dimension of the hammer (6A; 6B), said edge (12A; 12B) being directed in a direction substantially parallel to the axis of the rotating shaft (4) and projecting longitudinally beyond the second end of the hammer (6A; 6B) so as to pass at a nominal minimum distance from said screening mesh (5).

2. Device according to claim 1, wherein said scraper (11A; 11B) is fixed to the second end of the hammer (6A; 6B) on a side opposite to the front profile of the hammer (6A; 6B).

3. Device according to claim 1, wherein said scraper (11A; 11B) is removably fixed to the second end of the hammer (6A; 6B) by means of an Allen key.

4. Mounting method for a waste treatment device according to one of claims 1 to 3, comprising performing the following operations:
mounting said at least one hammer (6A; 6B) of the device on the rotating shaft (4) of the device;
mounting the screening mesh (5) of the device which separates the first cylindrical cavity, intended to contain recyclable material, from the second underlying cavity intended to collect waste material, said screening mesh (5) being mounted at a distance from the shaft (4) so as not to be touched by the hammer (6A; 6B) mounted on the rotating shaft (4);
measuring an actual minimum distance of the second end of the hammer (6A; 6B) from the screening mesh (5);
selecting a scraper (11A; 11B) terminating in an edge (12A; 12B), said scraper (11A; 11B) having a height corresponding to the difference between said actual minimum distance and a nominal minimum distance;
fixing said scraper (11A; 11B) removably onto said second end of the hammer so as to extend the longitudinal dimension of the hammer (6A; 6B) by said height of the scraper (11A; 11B), said edge being directed in a direction substantially parallel to the axis of the rotating shaft (4) and projecting longitudinally beyond the second end of the hammer (6A; 6B) so as to pass at said nominal minimum distance from the screening mesh (5).

## Patentansprüche

1. Abfallbehandlungsvorrichtung, die zum Trennen von wiederverwertbaren Materialien geeignet ist, die mit anderem Abfall vermischt sind, umfassend:
- ein Gehäuse (1), das im Inneren einen ersten im Wesentlichen zylindrischen Hohlraum, in den der zu behandelnde Abfall durch eine Einlassöffnung (2) eingeleitet wird, einen zweiten darunterliegenden Hohlraum zum Sammeln von Abfallmaterial und eine Auslassöffnung (3) zum Abgeben von zu recycelndem Material aus dem ersten zylindrischen Hohlraum aufweist, die in einem der Einlassöffnung (2) in Längsrichtung gegenüberliegenden Bereich ausgebildet ist,
- eine Welle (4), die sich um ihre Drehachse im Wesentlichen in der Mitte des ersten zylindrischen Hohlraums dreht,
- zumindest ein Siebgewebe (5), das den ersten zylindrischen Hohlraum, der zur Aufnahme von wiederverwertbarem Material bestimmt ist, vom zweiten darunterliegenden Hohlraum trennt, der zur Sammlung von Abfallmaterial bestimmt ist,
- zumindest einen Hammer (6A; 6B) mit einem ersten Ende, das an der Welle (4) befestigt ist, um so in der Lage zu sein, um sich in einer Ebene senkrecht zur Drehachse der Welle (4) zu drehen, und der in einem zweiten Ende endet, das dem ersten Ende gegenüberliegt, der eingerichtet ist, um den Abfall zu zerkleinern, zu schreddern und den zerkleinerten Abfall zu schieben, so dass er sich in axialer Richtung innerhalb des ersten zylindrischen Hohlraums in Richtung der Auslassöffnung (3) vorbewegt, und entweder ein dünnes Frontprofil (9A) zum Zerschneiden des Abfalls und zum Schieben in axialer Richtung oder ein dickes Frontprofil (9B) zum Zermahlen des Abfalls und zum Schieben in axialer Richtung aufweist, **dadurch gekennzeichnet, dass**:
- der zumindest eine Hammer (6A; 6B) mit einem jeweiligen Abstreifer (11A; 11B) versehen ist, der in einer Kante (12A; 12B) endet, wobei der Abstreifer (11A; 11B) entfernbar am zweiten Ende des Hammers (6A; 6B) fixiert ist, um die Längsabmessung des Hammers (6A; 6B) zu verlängern, wobei die Kante (12A; 12B) in eine Richtung weist, die im Wesentlichen parallel zur Achse der rotierenden Welle (4) verläuft, und in Längsrichtung über das zweite Ende des Hammers (6A; 6B) hinausragt, um in einem Nenn-Mindestabstand zum Siebgewebe (5) zu verlaufen.

2. Vorrichtung nach Anspruch 1, wobei der Abstreifer (11A; 11B) am zweiten Ende des Hammers (6A; 6B) auf einer dem Frontprofil des Hammers (6A; 6B) gegenüberliegenden Seite fixiert ist.

3. Vorrichtung nach Anspruch 1, wobei der Abstreifer (11A; 11B) mittels eines Inbusschlüssels entfernbar am zweiten Ende des Hammers (6A; 6B) fixiert ist.

4. Montageverfahren für eine Abfallbehandlungsvorrichtung nach einem der Ansprüche 1 bis 3, das ein Durchführen der folgenden Schritte aufweist:
- Montieren des zumindest einen Hammers (6A, 6B) der Vorrichtung an der rotierenden Welle (4) der Vorrichtung;
- Montieren des Siebgewebes (5) der Vorrichtung, das den ersten zylindrischen Hohlraum, der zur Aufnahme von wiederverwertbarem Material bestimmt ist, vom zweiten darunterliegenden Hohlraum trennt, der zum Sammeln von Abfallmaterial bestimmt ist, wobei das Siebgewebe (5) in einem Abstand zur Welle (4) montiert ist, um nicht vom an der rotierenden Welle (4) montierten Hammer (6A; 6B) berührt zu werden;
- Messen eines tatsächlichen Mindestabstands des zweiten Endes des Hammers (6A, 6B) zum Siebgewebe (5),
- Auswählen eines Abstreifers (11A; 11B), der in einer Kante (12A; 12B) endet, wobei der Abstreifer (11A; 11B) eine Höhe aufweist, die der Differenz zwischen dem tatsächlichen Mindestabstand und einem Nenn-Mindestabstand entspricht;
- entfernbares Fixieren des Abstreifers (11A; 11B) am zweiten Ende des Hammers, um die Längsabmessung des Hammers (6A; 6B) um die Höhe des Abstreifers (11A; 11B) zu verlängern, wobei die Kante in eine Richtung weist, die im Wesentlichen parallel zur Achse der rotierenden Welle (4) verläuft, und in Längsrichtung über das zweite Ende des Hammers (6A; 6B) hinausragt, um im Nenn-Mindestabstand zum Siebgewebe (5) zu verlaufen.

## Revendications

1. Dispositif de traitement des déchets adapté pour séparer des matériaux recyclables mélangés à d'autres déchets, comprenant :
un boîtier (1) qui présente, définie intérieurement, une première cavité sensiblement cylindrique à l'intérieur de laquelle des déchets à traiter sont introduits à travers une ouverture d'entrée (2), une deuxième cavité sous-jacente pour collecter des matériaux de déchets et une ouverture de sortie (3) pour décharger, depuis la première cavité cylindrique, des matériaux à recycler, définie dans une zone longitudinalement opposée à l'ouverture d'entrée (2),
un arbre (4), tournant autour de son axe de rotation, sensiblement au centre de la première cavité cylindrique,
au moins une grille de tamisage (5) qui sépare la première cavité cylindrique, destinée à contenir des matériaux recyclables, de la deuxième cavité sous-jacente destinée à collecter des matériaux de déchets,
au moins un marteau (6A ; 6B) ayant une première extrémité liée audit arbre (4), de manière à pouvoir tourner dans un plan perpendiculaire à l'axe de rotation de l'arbre (4), et se terminant par une deuxième extrémité, opposée à la première extrémité, configurée pour fragmenter les déchets, en les déchiquetant, et pour pousser les déchets déchiquetés de sorte qu'ils avancent dans une direction axiale à l'intérieur de la première cavité cylindrique vers l'ouverture de sortie (3), et ayant soit un profil avant mince (9A) pour couper les déchets et les pousser dans la direction axiale, soit un profil avant épais (9B) pour broyer les déchets et les pousser dans la direction axiale,
**caractérisé en ce que** :
ledit au moins un marteau (6A ; 6B) est muni d'un racleur (11A ; 11B) respectif se terminant par un bord (12A ; 12B), ledit racleur (11A ; 11B) étant fixé de manière amovible sur ladite deuxième extrémité du marteau (6A ; 6B) de manière à prolonger la dimension longitudinale du marteau (6A ; 6B), ledit bord (12A ; 12B) étant orienté dans une direction sensiblement parallèle à l'axe de l'arbre (4) rotatif et faisant saillie longitudinalement au-delà de la deuxième extrémité du marteau (6A ; 6B) de manière à passer à une distance minimale nominale de ladite grille de tamisage (5).

2. Dispositif selon la revendication 1, dans lequel ledit racleur (11A ; 11B) est fixé à la deuxième extrémité du marteau (6A ; 6B), sur un côté opposé au profil avant du marteau (6A ; 6B).

3. Dispositif selon la revendication 1, dans lequel ledit racleur (11A ; 11B) est fixé de manière amovible à la deuxième extrémité du marteau (6A ; 6B) au moyen d'une clé Allen.

4. Procédé de montage d'un dispositif de traitement des déchets selon l'une des revendications 1 à 3, comprenant l'exécution des opérations suivantes :
monter ledit au moins un marteau (6A ; 6B) du dispositif sur l'arbre (4) rotatif du dispositif ;
monter la grille de tamisage (5) du dispositif qui sépare la première cavité cylindrique, destinée à contenir des matériaux recyclables, de la deuxième cavité sous-jacente destinée à collecter des matériaux de déchets, ladite grille de tamisage (5) étant montée à une distance de l'arbre (4) de manière à ne pas être touchée par le marteau (6A ; 6B) monté sur l'arbre (4) rotatif ;
mesurer une distance minimale réelle entre la deuxième extrémité du marteau (6A ; 6B) et la grille de tamisage (5) ;
sélectionner un racleur (11A ; 11B) se terminant par un bord (12A ; 12B), ledit racleur (11A ; 11B) ayant une hauteur correspondant à la différence entre ladite distance minimale réelle et une distance minimale nominale ;
fixer ledit racleur (11A ; 11B) de manière amovible sur ladite deuxième extrémité du marteau de manière à prolonger la dimension longitudinale du marteau (6A ; 6B) de ladite hauteur du racleur (11A ; 11B), ledit bord étant orienté dans une direction sensiblement parallèle à l'axe de l'arbre (4) rotatif et faisant saillie longitudinalement au-delà de la deuxième extrémité du marteau (6A ; 6B) de manière à passer à ladite distance minimale nominale de la grille de tamisage (5).
